# EUROPEAN PATENT APPLICATION

(11) **EP 2 615 536 A2**
(43) Date of publication of application: **17.07.2013**
(21) Application number: 13150141.3
(22) Date of filing: 03.01.2013
(51) Int. Cl.: G06F 3/0488

(54) **Apparatus and method for zooming touch screen in electronic device**

(30) Priority: 11.01.2012 KR 20120003526
(71) Applicant: Samsung Electronics Co., Ltd, Gyeonggi-do 443-742 (KR)
(72) Inventor: Kwon, Woo-Up, Seoul (KR)
(74) Representative: Harrison Goddard Foote LLP

(57) **Abstract**

An apparatus and method zoom into a screen in an electronic device employing a touch screen. The method includes, upon detection of a touch input, confirming a zoom-in area by considering touch information, confirming a zoom-in ratio for the zoom-in area, and displaying the zoom-in area by zooming in the area according to the zoom-in ratio.

## Description

### TECHNICAL FIELD OF THE INVENTION

The present disclosure relates generally to an apparatus and method for zooming in on a screen in an electronic device employing a touch screen.

### BACKGROUND OF THE INVENTION

Functions of electronic devices have become more advanced with the development of general technologies such as wired or wireless communication technologies, multimedia technologies, hardware manufacturing technologies such as a Central Processing Unit (CPU) and a memory, power charging technologies, etc.

Recently, as multimedia services are provided, there is an increase in an amount of information to be processed and displayed. As a result, there is a growing interest in providing an electronic device employing a touch screen that is capable of providing an increased size of a display portion by improving space utilization.

The touch screen is an input and display device which allows information to be displayed on the screen and allows user input to be made by a touch applied to the same screen. Accordingly, when an electronic device uses a touch screen, the electronic device can use an increased size display area by removing an additional input device such as a key pad. For example, in case of using a full touch scheme, in which the area for inputting a touch is applied to the full screen area, a relatively large display area can be provided by utilizing a front surface of the electronic device as the screen.

Since an electronic device employing a touch screen does not use an additional input device such as a keypad, a method of manipulating the electronic device must be changed. Accordingly, there is a need for a user interface for an electronic device employing a touch screen.

### SUMMARY OF THE INVENTION

It is an aim of certain embodiments of the present invention to address, solve, mitigate or obviate, at least partly, at least one of the problems and/or disadvantages associated with the related art, including the above-discussed deficiencies. Certain embodiments aim to provide at least one of the advantages described below.

Accordingly, certain aspects of the present invention provide an apparatus and method for zooming in on a screen in an electronic device employing a touch screen.

Other aspects of the present invention provide an apparatus and method for zooming in on a screen by considering touch information in an electronic device employing a touch screen.

Other aspects of the present invention provide an apparatus and method for zooming in on a screen by considering multi-touch information in an electronic device employing a touch screen.

Other aspects of the present invention provide an apparatus and method for zooming in on a screen of an area desired by a user in an electronic device employing a touch screen.

Other aspects of the present invention provide an apparatus and method for confirming a screen zoom-in area by considering touch information in an electronic device employing a touch screen.

In accordance with an aspect of the present invention, a method of zooming in on a screen in an electronic device employing a touch screen is provided. The method includes: upon detection of a touch input, confirming a zoom-in area by considering touch information; confirming a zoom-in ratio for the zoom-in area; and displaying the zoom-in area by zooming in on the area according to the zoom-in ratio.

In accordance with another aspect of the present invention, an apparatus for zooming in on a screen in an electronic device is provided. The apparatus includes: a touch screen; and a controller for, upon detection of a touch input through the touch screen, displaying a zoom-in area, confirmed by considering touch information, by zooming in on the area according to a zoom-in ratio.

In accordance with another aspect of the present invention, an apparatus for zooming in on a screen in an electronic device is provided. The apparatus includes: one or more controllers; a storage unit; and one or more programs stored in the storage unit and configured to be executable by the one or more controllers, wherein the program includes one or more commands for, upon detection of a touch input, confirming a zoom-in area by considering the touch information and for confirming a zoom-in ratio for the zoom-in area, and one or more commands for displaying the zoom-in area by zooming in on the area according to the zoom-in ratio.

Another aspect of the present invention provides a computer program comprising instructions arranged, when executed, to implement a method and/or apparatus in accordance with any one of the above-described aspects. A further aspect provides machine-readable storage storing such a program.

Other aspects, advantages, and salient features of the invention will become apparent to those skilled in the art from the following detailed description, which, taken in conjunction with the annexed drawings, disclose exemplary embodiments of the invention.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases

Throughout the description and claims of this specification, the singular encompasses the plural unless the context otherwise requires. In particular, it is to be understood that the singular forms "a," "an," and "the" include plural referents unless the context clearly dictates otherwise. Thus, for example, reference to "an object" includes reference to one or more of such objects.

Throughout the description and claims of this specification, language in the general form of "X for Y" (where Y is some action, activity or step and X is some means for carrying out that action, activity or step) encompasses means X adapted or arranged specifically, but not exclusively, to do Y.

The terms and words used in the following description and claims are not limited to the bibliographical meanings, but, are merely used by the inventor to enable a clear and consistent understanding of the invention.

### BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates a block diagram of an electronic device according to an exemplary embodiment of the present disclosure;

FIG. 2 illustrates a flowchart of a process of zooming in a screen by considering multi-touch information in an electronic device according to an exemplary embodiment of the present disclosure;

FIGs. 3A and 3B illustrate a screen configuration for zooming in a screen by considering multi-touch information in an electronic device according to an exemplary embodiment of the present disclosure;

FIG. 4 illustrates a flowchart of a process of zooming in a screen by considering a touch duration time in an electronic device according to an exemplary embodiment of the present disclosure;

FIGs. 5A, 5B and 5C illustrate a screen configuration for zooming in a screen by considering a touch duration time in an electronic device according to an exemplary embodiment of the present disclosure;

FIG. 6 illustrates a flowchart of a process of zooming in a screen by using a screen zoom-in icon in an electronic device according to an exemplary embodiment of the present disclosure; and

FIGs. 7A, 7B, 7C and 7D illustrate a screen configuration for zooming in a screen by using a screen zoom-in icon in an electronic device according to an exemplary embodiment of the present disclosure.

### DETAILED DESCRIPTION OF THE INVENTION

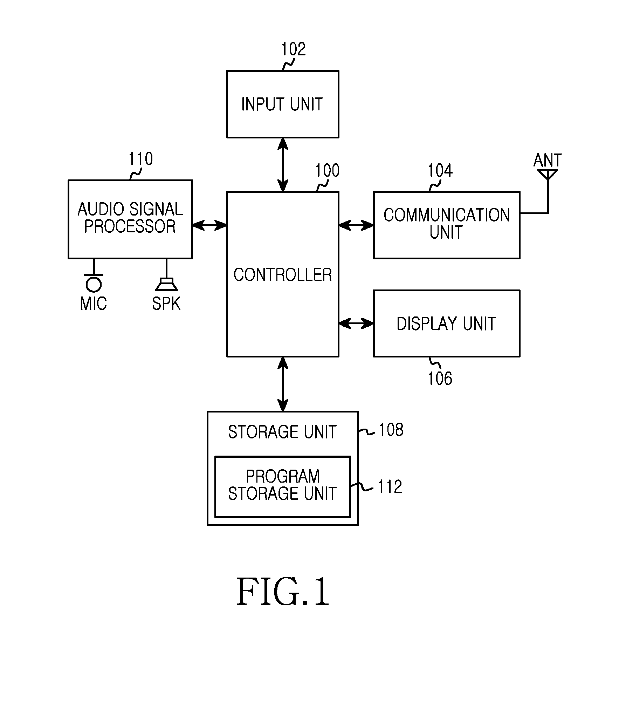

FIGURES 1 through 7D, discussed below, and the various embodiments used to describe the principles of the present disclosure in this patent document are by way of illustration only and should not be construed in any way to limit the scope of the disclosure. Accordingly, those of ordinary skill in the art will recognize that various changes and modifications of the embodiments described herein can be made without departing from the scope of the invention. Those skilled in the art will understand that the principles of the present disclosure may be implemented in any suitably arranged system or device. Exemplary embodiments of the present invention will be described herein below with reference to the accompanying drawings. In the following description, well-known functions or constructions are not described in detail since they would obscure the invention in unnecessary detail. Also, the terms used herein are defined according to the functions of the present invention. Thus, the terms may vary depending on a user's or operator's intension and usage. That is, the terms used herein must be understood based on the descriptions made herein.

Features, integers, characteristics, compounds, chemical moieties or groups described in conjunction with a particular aspect, embodiment or example of the invention are to be understood to be applicable to any other aspect, embodiment or example described herein unless incompatible therewith.

Hereinafter, exemplary embodiments of the present invention using a technique for zooming in on a screen in an electronic device employing a touch screen will be described.

Electronic devices embodying the present invention may be in the form of, for example, a mobile communication terminal employing a touch screen, a smart phone, a Personal Digital Assistant (PDA), a Mobile Internet Device (MID), a laptop, an Ultra Mobile Personal Computer (UMPC), a tablet Personal Computer (PC), a net-book, a navigation, an MPEG-1 Audio Layer 3 (MP3) player, a Portable Multimedia Player (PMP), etc.

FIG. 1 illustrates a block diagram of an electronic device according to an exemplary embodiment of the present disclosure.

As illustrated, the electronic device includes a controller 100, an input unit 102, a communication unit 104, a display unit 106, a storage unit 108, and an audio signal processor 110.

The controller 100 provides overall control of the electronic device.

The controller 100 provides control to zoom in on a screen (e.g. a certain portion of the screen is displayed in magnified form) by considering touch information of a user. In other words, the zooming in on the screen is performed or controlled based on the touch information of the user.

In general, the touch information may comprise information relating to any characteristic of any type of touch or gesture. For example, the touch information may comprise positions and/or durations and/or the number of touches of one or more individual touches (e.g. a sequential set of touches) made by the user on the touch screen. The touch information may additionally or alternatively comprise positions and/or durations and/or number of touches of a set of touches forming a multi-touch (e.g. a touch in which the screen is touched in multiple positions simultaneously) made by the user on the touch screen. The touch information may additionally or alternatively comprise, in relation to a drag gesture (e.g. a situation where a user touches the screen at a first position, drags the touch position across the screen while maintaining contact with the screen, then releases the touch at a second position), the position of the initial touch, the distance and/or speed of the drag, and/or the position of the release point. The skilled person will appreciate that the touch information may be in a variety of different forms, not limited to the specific examples described herein.

In certain embodiments of the present invention, zooming-in on a screen based on touch information may be performed when a screen zoom-in mode has been activated. The screen zoom-in mode may be activated in various ways, such as by selecting a particular icon or menu item or by adjusting a setting. The screen zoom-in mode may alternatively or additionally be activated according to a touch or gesture. For example, the screen zoom-in mode may be activated by performing a certain gesture, performing a multi-touch, or by maintaining a touch for longer that a certain duration.

Some of these examples are described in further detail below, in relation to certain specific embodiments. The skilled person will appreciate that each of the various ways in which the screen zoom-in mode may be activated may be applied in a wide variety of embodiments. In particular, the various techniques for activating the screen zoom-in mode and the various techniques for zooming-in on a screen based on touch information may be applied in any suitable combination.

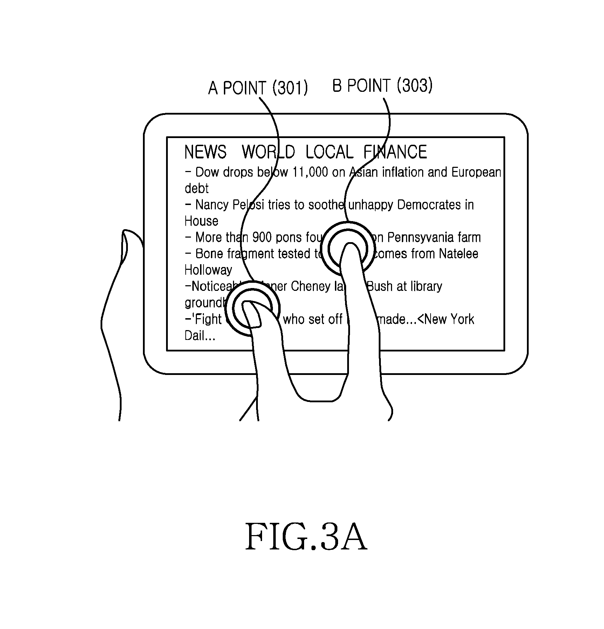

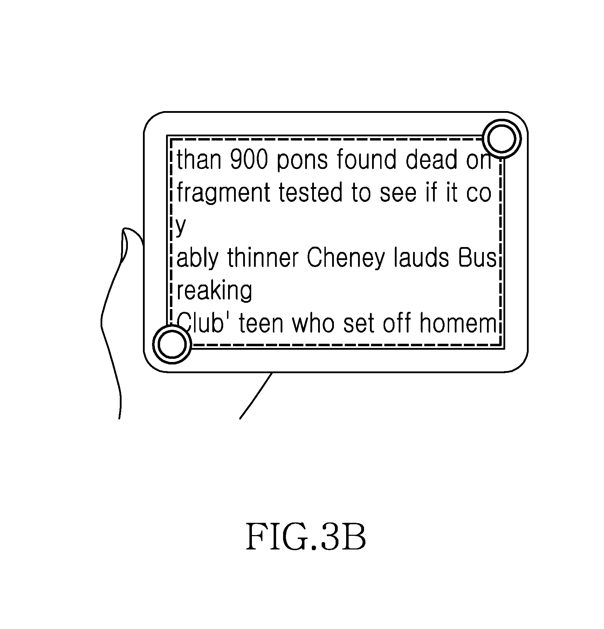

For example, at the occurrence of a multi-touch event as illustrated in FIG. 3A, the controller 100 confirms (e.g. determines or calculates) a screen zoom-in area (e.g. the portion of the screen that is to be displayed in magnified form) by considering the multi-touch information. Thereafter, as illustrated in FIG. 3B, the controller 100 provides control to zoom in on the screen zoom-in area (e.g. by displaying the screen zoom-in area in magnified form). In this example, the controller 100 zooms in on the screen zoom-in area according to a pre-set screen zoom-in ratio or a screen zoom-in ratio determined by the user.

In some embodiments, in the case of a single touch, the screen zoom-in area may be defined, for example, as a portion of the screen being an area of a certain size (e.g. absolute size or a size defined relative to the size of the screen) and/or aspect ratio, based on the touch as a reference point. For example, the position of the touch may define the centre of the screen zoom-in area, or a particular corner of the screen zoom-in area. In some embodiments, in the case of a multi-touch or a sequence of touches, the positions of the touches may be used to define characteristic points (e.g. the centre or corners) of the screen zoom-in area. For example, in the case that two touches are made, either sequentially or simultaneously in a multi-touch, the positions of the two touches may define the positions of two particular corners (e.g. diagonally opposing corners) of the screen zoom-in area. In some embodiments, the screen zoom-in area may be magnified to occupy the entire screen. In this case, the screen zoom-in area may be defined to achieve a certain aspect ratio based on the screen aspect ratio, or to achieve a magnification or zoom-in ratio based on the size of the screen. The skilled person will appreciate that there are numerous ways in which the screen zoom-in area may be defined based on touch information, not limited to the specific examples described herein.

In some embodiments, the screen zoom-in area may be magnified by a certain zoom-in ratio (e.g. default, pre-set or predetermined). The skilled person will appreciate that there are numerous ways in which the zoom-in ratio may be defined, not limited to the specific examples described herein.

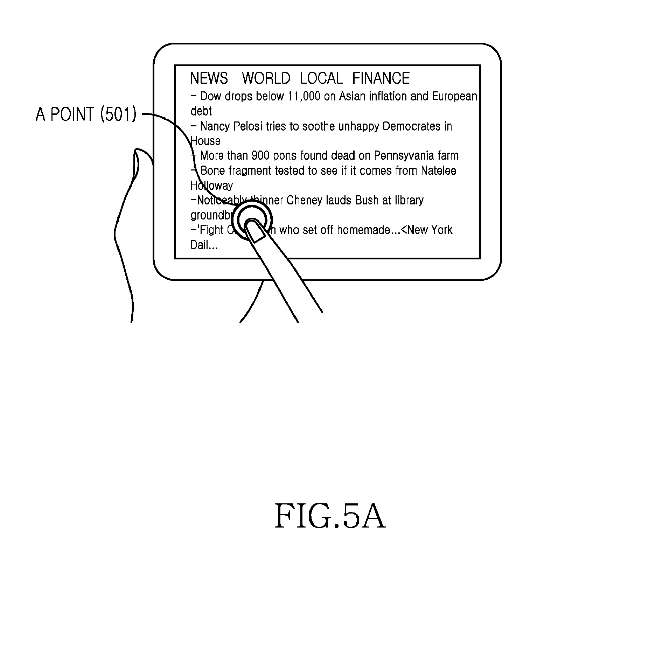

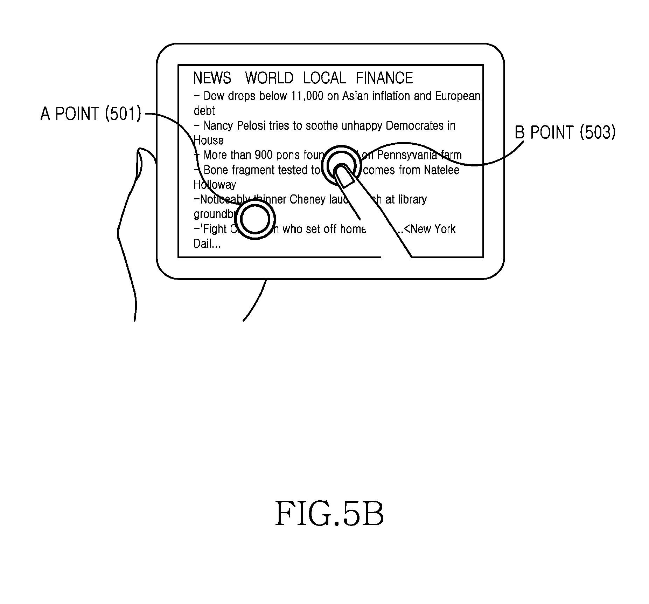

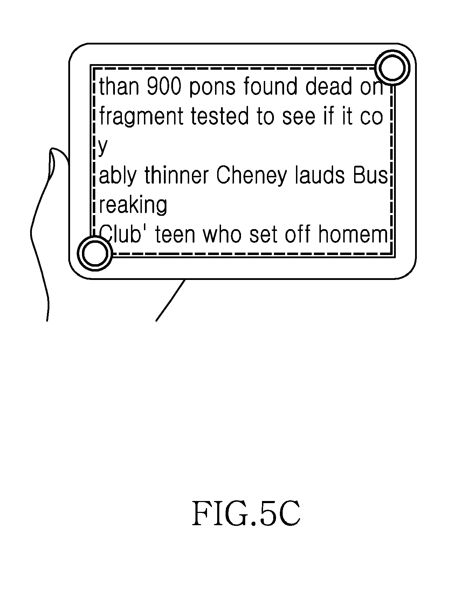

In another example, if a first touch (see reference numeral 501 of FIGs. 5A and 5B) of the user is maintained for more than a reference time (e.g. a predetermined or preset time), as illustrated in FIG. 5A, the controller 100 activates a screen zoom-in mode. Thereafter, upon detection of a second touch input, the controller 100 confirms the screen zoom-in area by considering an A-point 501 based on the first touch and a B-point 503 based on the second touch as illustrated in FIG. 5B. Thereafter, the controller 100 provides control to zoom in on the screen zoom-in area as illustrated in FIG. 5C. In this example, the controller 100 zooms in on the screen zoom-in area according to the pre-set screen zoom-in ratio or the screen zoom-in ratio determined by the user.

In another example, if the first touch 501 of the user is maintained for more than the reference time as illustrated in FIG. 5A, the controller 100 activates the screen zoom-in mode. Thereafter, upon detection of a drag of the first touch, the controller 100 confirms the screen zoom-in area by considering a drag distance of the first touch. Thereafter, the controller 100 provides control to zoom in on the screen zoom-in area as illustrated in FIG. 5C. In this example, the controller 100 zooms in on the screen zoom-in area according to the pre-set screen zoom-in ratio or the screen zoom-in ratio determined by the user.

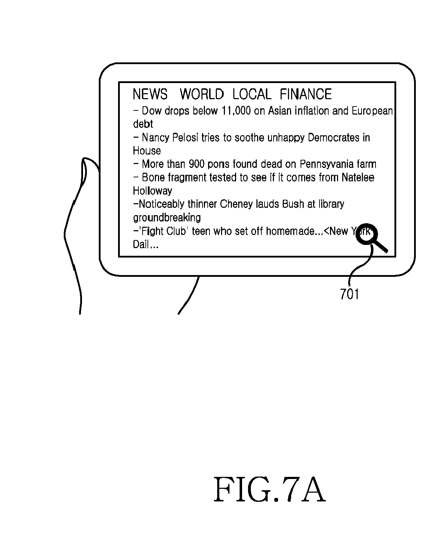

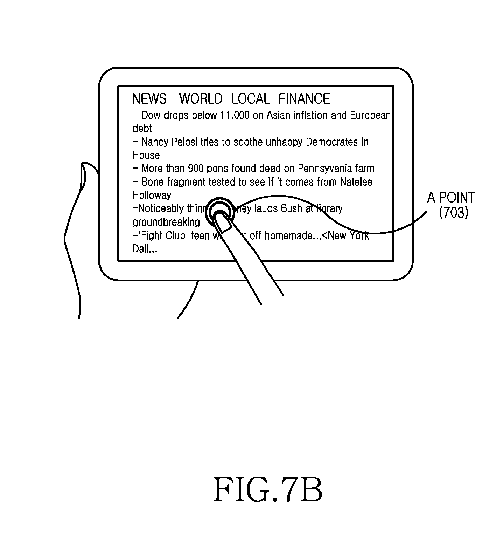

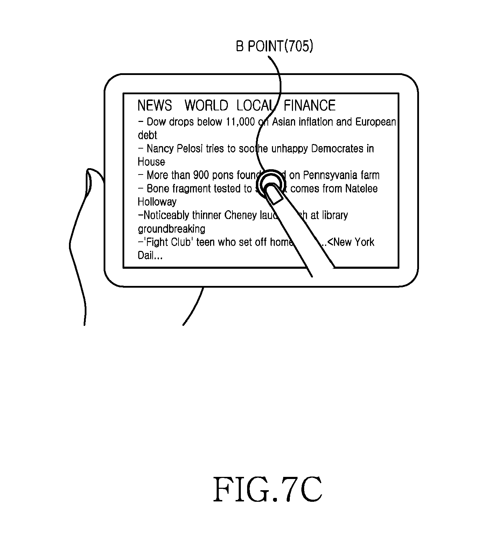

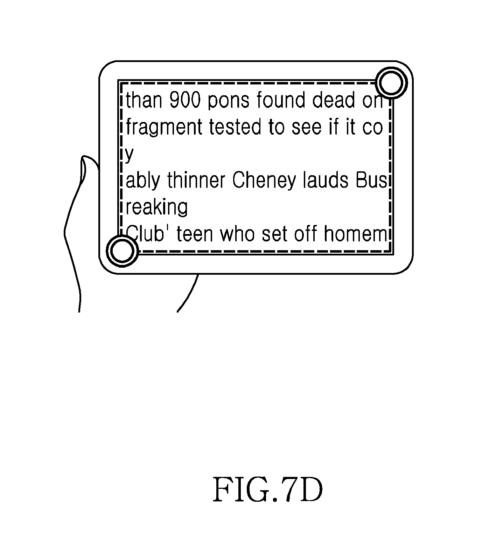

In another example, if a screen zoom-in icon is selected as illustrated in FIG. 7A, the controller 100 activates the screen zoom-in mode. Thereafter, the controller 100 zooms in on the screen zoom-in area determined by considering a plurality of touch points as illustrated in FIGs. 7B and 7C. Thereafter, the controller 100 provides control to zoom in on the screen zoom-in area as illustrated in FIG. 7D. In this example, the controller 100 zooms in on the screen zoom-in area according to the pre-set screen zoom-in ratio or the screen zoom-in ratio determined by the user.

The input unit 102 provides the controller 100 with input data generated by a user's selection. For example, the input unit 102 may include one or more buttons for controlling the electronic device. In another example, the input unit 102 may include a keypad to receive input data from the user in addition to the display unit 106.

For voice and data communication, the communication unit 104 processes a signal transmitted and received through an antenna.

The display unit 106 performs a function of displaying information. For example, the display unit 106 may display status information of the electronic device, a character which is input by the user, a motion image (e.g. video), a still image, or the like, under the control of the controller 100. In embodiments of the present invention, the display unit 106 displays the screen zoom-in area by zooming in on the area under the control of the controller 100. In an exemplary embodiment, the display unit 106 displays the screen zoom-in icon as illustrated in FIG. 7A.

If the display unit 106 comprises a touch screen, the display unit 106 provides the controller 100 with input data generated when a user uses the touch screen.

The storage unit 108 may include a program storage unit 112 for storing a program for controlling an operation of the electronic device and a data storage unit for storing data generated while the program is executed. For example, the data storage unit may store a screen zoom-in ratio. In another example, the program storage unit 112 may store a program or a command set as a group of commands for zooming in on the screen when the program is executed by the controller 100.

The audio signal processor 110 controls an input/output of an audio signal. For example, the audio signal processor 110 may output an audio signal provided from the controller 100 to an external element through a speaker, and provide an audio signal provided from a microphone to the controller 100.

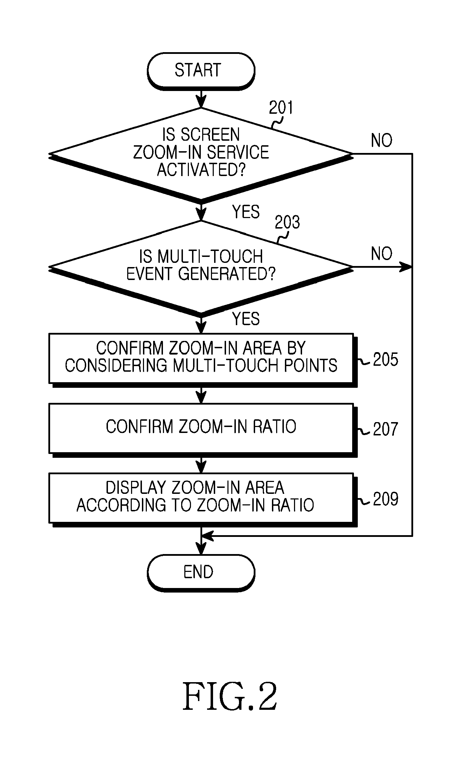

FIG. 2 illustrates a flowchart of a process for zooming in on a screen by considering multi-touch information in an electronic device according to an exemplary embodiment of the present invention.

Referring to FIG. 2, the controller 100 confirms whether a screen zoom-in service (e.g. including a screen zoom-in mode) is activated in step 201. For example, the controller 100 may confirm whether a screen zoom-in menu is configured by a user, or whether a relevant setting has been suitably configured.

If the screen zoom-in service is not activated, the controller 100 ends the procedure of FIG. 2.

Otherwise, if the screen zoom-in service is activated, proceeding to step 203, the controller 100 confirms whether a multi-touch event occurs. For example, the controller 100 may confirm whether the display unit 106 is multiple-touched by the user as illustrated in FIG. 3A.

If the multi-touch event does not occur, the procedure of FIG. 2 ends.

Otherwise, if the multi-touch event occurs, proceeding to step 205, the controller 100 confirms a screen zoom-in area by considering multi-touch information. For example, the controller 100 confirms the screen zoom-in area by considering an A-point 301 and B-point 303 touched by the user as illustrated in FIG. 3A.

In addition, if the multi-touch event occurs, proceeding to step 207, the controller 100 confirms a screen zoom-in ratio. For example, the controller 100 may determine the screen zoom-in ratio by considering a size of the display unit 106 and a size of the screen zoom-in area confirmed in step 205. In another example, the controller 100 may confirm a screen zoom-in ratio determined by the user. In another example, the controller 100 may confirm a pre-set screen zoom-in ratio (e.g. a zoom-in ratio pre-set by a user or a default zoom-in ratio).

In step 209, the controller 100 zooms in on a screen by considering the screen zoom-in area confirmed in step 205 and the screen zoom-in ratio confirmed in step 207. For example, the controller 100 may confirm the screen zoom-in area as illustrated in FIG. 3A, and thereafter zooms in on the screen as illustrated in FIG. 3B by considering the screen zoom-in ratio.

Thereafter, the procedure of FIG. 2 ends.

In the aforementioned embodiment, the controller 100 confirms the screen zoom-in area by considering multi-touch information in step 205, and thereafter confirms the screen zoom-in ratio in step 207. In certain embodiments, the controller 100 may perform a process of confirming the screen zoom-in area and a process of confirming the screen zoom-in ratio in a parallel manner, or in a reverse order from that described above. For example, the controller 100 may confirm the screen zoom-in ratio in step 207, and thereafter may confirm the screen zoom-in area by considering the multi-touch information in step 205.

In the aforementioned embodiment, the controller 100 provides the screen zoom-in service, or activates the screen zoom-in mode, by considering the multi-touch information.

In another embodiment, the controller 100 may provide the screen zoom-in service, or activates the screen zoom-in mode, by considering a touch duration time.

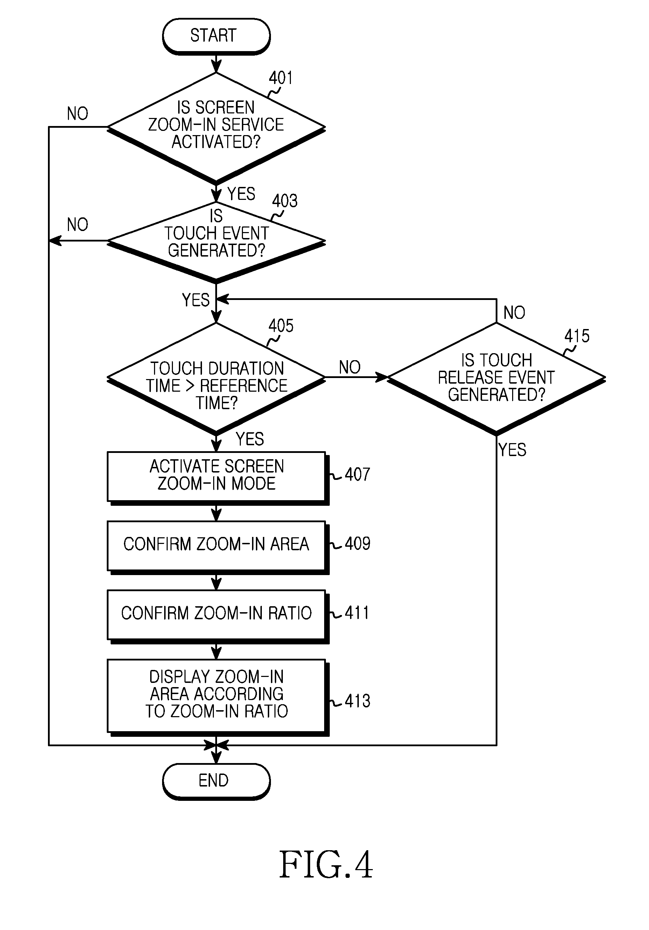

FIG. 4 illustrates a flowchart of a process of zooming in a screen by considering a touch duration time in an electronic device according to an exemplary embodiment of the present disclosure.

Referring to FIG. 4, the controller 100 confirms whether a screen zoom-in service (e.g. including a screen zoom-in mode) is activated in step 401. For example, the controller 100 may confirm whether a screen zoom-in menu is configured by a user, or whether a relevant setting has been suitably configured.

If the screen zoom-in service is not activated, the procedure of FIG. 4 ends.

Otherwise, if the screen zoom-in service is activated, proceeding to step 403, the controller 100 confirms whether a touch event occurs. For example, the controller 100 may confirm whether the display unit 106 is touched by the user as illustrated in FIG. 5A.

If the touch event does not occur, the procedure of FIG. 4 ends.

Otherwise, if the touch event occurs, proceeding to step 405, the controller 100 compares a touch duration time and a reference (e.g. predetermined or preset) time to determine whether the screen zoom-in mode is activated. That is, the controller 100 confirms whether the touch duration time is greater than the reference time. For example, if the A-point 501 is touched by the user as illustrated in FIG. 5A, the controller 100 compares the touch duration time of the A-point 501 and the reference time.

If the touch duration time is greater than the reference time, proceeding to step 407, the controller 100 activates the screen zoom-in mode.

After activating the screen zoom-in mode, proceeding to step 409, the controller 100 confirms a screen zoom-in area. For example, if a touch is detected at the B-point 503 as illustrated in FIG. 5B, the controller 100 may confirm the screen zoom-in area by considering the A-point 501 and B-point 503 touched by the user. In another example, if a touch drag is detected starting from the A-point 501, the controller 100 may confirm the screen zoom-in area by considering a touch drag distance starting from the A-point 501.

Further, after activating the screen zoom-in mode, proceeding to step 411, the controller 100 confirms a screen zoom-in ratio. For one example, the controller 100 may determine the screen zoom-in ratio by considering a size of the display unit 106 and a size of the screen zoom-in area confirmed in step 409. In another example, the controller 100 may confirm a screen zoom-in ratio determined by the user. In another example, the controller 100 may confirm a pre-set screen zoom-in ratio.

Thereafter, proceeding to step 413, the controller 100 zooms in on the screen by considering the screen zoom-in area confirmed in step 409 and the screen zoom-in ratio confirmed in step 411. For example, the controller 100 may confirm the screen zoom-in area as illustrated in FIG. 5B, and zoom in on the screen as illustrated in FIG. 5C by considering the screen zoom-in ratio.

Meanwhile, if the touch duration time is less than the reference time, proceeding to step 415, the controller 100 confirms whether a touch release event occurs.

If the touch release event does not occur, returning to step 405, the controller 100 compares the touch duration time and the reference time.

Otherwise, if the touch release event occurs, the controller 100 recognizes that the screen zoom-in mode is not activated (e.g. has become deactivated). Accordingly, the procedure of FIG. 4 ends.

Thereafter, the procedure of FIG. 4 ends.

In the aforementioned exemplary embodiment, the controller 100 confirms the screen zoom-in area by considering touch information in step 409, and confirms the screen zoom-in ratio in step 411. In certain embodiments, the controller 100 may perform a process of confirming the screen zoom-in area and a process of confirming the screen zoom-in ratio in a parallel manner, or in a reverse order from that described above. For example, the controller 100 may confirm the screen zoom-in ratio in step 411, and thereafter may confirm the screen zoom-in area by considering the touch information in step 409.

If a screen zoom-in service (e.g. including a screen zoom-in mode) is activated in the aforementioned exemplary embodiment of the present disclosure, the screen zoom-in service is provided.

In another exemplary embodiment, an icon may be used to activate the screen zoom-in service in the electronic device.

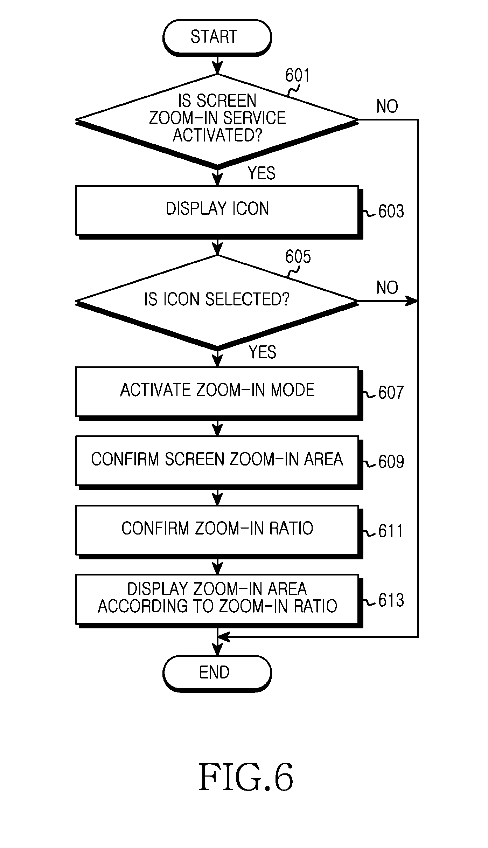

FIG. 6 illustrates a flowchart of a process for zooming in on a screen by using a screen zoom-in icon in an electronic device according to an exemplary embodiment of the present disclosure.

Referring to FIG. 6, the controller 100 confirms whether a screen zoom-in service is activated in step 601. For example, the controller 100 may confirm whether a screen zoom-in menu is configured by a user, or whether a relevant setting has been suitably configured.

If the screen zoom-in service is not activated, the procedure of FIG. 6 ends.

Otherwise, if the screen zoom-in service is activated, proceeding to step 603, the controller 100 displays a screen zoom-in icon. For example, the controller 100 may control display of a screen zoom-in icon 701 on the display unit 106 as illustrated in FIG. 7A. A position of the screen zoom-in icon may be changed, for example, by the user.

In step 605, the controller 100 confirms whether the screen zoom-in icon is selected. For example, the controller 100 may confirm whether the screen zoom-in icon displayed in step 603 is touched by the user.

If the screen zoom-in icon is not selected, the procedure of FIG. 6 ends.

Otherwise, if the screen zoom-in icon is selected, proceeding to step 607, the controller 100 activates a screen zoom-in mode.

After activating the screen zoom-in mode, proceeding to step 609, the controller 100 confirms the screen zoom-in area. For one example, the controller 100 may confirm the screen zoom-in area by considering an A-point 703 and B-point 705 touched by the user as illustrated in FIGs. 7B and C. In another example, after activating the screen zoom-in mode, the screen zoom-in area may be confirmed by considering multi-touch information generated according to a multi-touch performed by the user.

In addition, after activating the screen zoom-in mode, proceeding to step 611, the controller 100 confirms the screen zoom-in ratio. For one example, the controller 100 may determine the screen zoom-in ratio by considering a size of the display unit 106 and a size of the screen zoom-in area confirmed in step 609. In another example, the controller 100 may confirm a screen zoom-in ratio determined by the user. In another example, the controller 100 may confirm a pre-set screen zoom-in ratio.

In step 613, the controller 100 zooms in on a screen by considering the screen zoom-in area confirmed in step 609 and the screen zoom-in ratio confirmed in step 611. For example, the controller 100 may confirm the screen zoom-in area as illustrated in FIGs. 7B and C, and thereafter zoom in on the screen as illustrated in FIG. 7D by considering the screen zoom-in ratio.

Thereafter, the procedure of FIG. 6 ends.

In the aforementioned embodiment, the controller 100 confirms the screen zoom-in area by considering multi-touch information in step 609, and thereafter confirms the screen zoom-in ratio in step 611. In certain embodiments, the controller 100 may perform a process of confirming the screen zoom-in area and a process of confirming the screen zoom-in ratio in a parallel manner, or in a reverse order from that described above. For example, the controller 100 may confirm the screen zoom-in ratio in step 611, and thereafter may confirm the screen zoom-in area by considering the multi-touch information in step 609.

As described above, since a screen zoom-in service for an area desired by a user is provided by considering touch information in an electronic device employing a touch screen, there is an advantage in that the user of the electronic device can easily use the screen zoom-in service.

It will be appreciated that embodiments of the present invention, including the above-described methods and apparatus, can be implemented in hardware or software alone or in combination. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like.

It will be appreciated that the storage devices and storage media are embodiments of machine-readable storage that are suitable for storing a program or programs comprising instructions that, when executed, implement embodiments of the present invention. Accordingly, embodiments provide a program comprising code for implementing apparatus or a method as claimed in any one of the claims of this specification and a machine-readable storage storing such a program. Still further, such programs may be conveyed electronically via any medium such as a communication signal carried over a wired or wireless connection and embodiments suitably encompass the same.

For example, as for the software, a computer-readable storage medium containing one or more programs (software modules) can be provided. One or more programs stored to the computer-readable storage medium are configured for execution of one or more processors of an electronic device such as portable terminal. One or more programs include instructions making the electronic device execute the methods according to the exemplary embodiments as described in the claims and/or the specification of the present disclosure.

Such programs (software module, software) can be stored to a random access memory, a non-volatile memory including a flash memory, a ROM, an Electrically Erasable Programmable ROM (EEPROM), a magnetic disc storage device, a compact disc ROM, Digital Versatile Discs (DVDs) or other optical storage devices, and a magnetic cassette. Alternatively, the programs can be stored to a memory combining part or all of those recording media. A plurality of memories may be equipped.

The programs can be stored to an attachable storage device of the electronic device accessible via the communication network such as Internet, Intranet, LAN, Wireless LAN (WLAN), or Storage Area Network (SAN), or a communication network alone or in combination. The storage device can access the electronic device through an external port.

A separate storage device in the communication network can access the portable electronic device.

While the present invention has been particularly shown and described with reference to exemplary embodiments thereof, it will be understood by those skilled in the art that various changes in form and details may be made therein without departing from the scope of the present invention as defined by the appended claims.

## Claims

1. A method of zooming in a screen in an electronic device employing a touch screen, the method comprising:
in response to detecting a touch input, determining a zoom-in area based on touch information;
determining a zoom-in ratio for the zoom-in area; and
displaying the zoom-in area by zooming into the zoom-in area according to the zoom-in ratio.

2. The method of claim 1, wherein determining the zoom-in area comprises, in response to detecting a multi-touch input, determining the zoom-in area based on multiple touch points associated with the multi-touch input.

3. The method of claim 1 or 2, wherein determining the zoom-in area comprises:
in response to detecting a first touch input, activating a screen zoom-in mode based on a touch duration time of the first touch input; and
in response to detecting a second touch input, determining the zoom-in area based on multiple touch points associated with the first touch input and the second touch input.

4. The method of claim 1, 2 or 3, wherein determining the zoom-in area comprises:
in response to detecting a first touch input, activating a screen zoom-in mode based on a touch duration time of the first touch input; and
in response to detecting of a drag of the first touch input, determining the screen zoom-in area based on a drag distance of the first touch input.

5. The method of any preceding claim, wherein determining the zoom-in area comprises:
in response to detecting a touch input for a zoom-in icon, activating a screen zoom-in mode; and
in response to detecting at least two touch inputs, determining the zoom-in area based on multiple touch points associated with the touch inputs.

6. The method of any preceding claim, wherein determining a size of the zoom-in area;
determining a total size of a display area; and
determining the zoom-in ratio based on the size of the zoom-in area and the total size of the display area.

7. The method of any preceding claim, wherein determining the zoom-in ratio comprises confirming a zoom-in ratio determined by a user.

8. An apparatus for zooming in on a screen in an electronic device, the apparatus comprising:
a touch screen; and
a controller configured for, in response to detecting a touch input through the touch screen, generating a display of a zoom-in area, determined based on touch information, by zooming into the zoom-in area according to a zoom-in ratio.

9. The apparatus of claim 8, wherein, in response to detecting a multi-touch input, the controller is configured for determining the zoom-in area based on multiple touch points associated with the multi-touch input.

10. The apparatus of claim 8 or 9, wherein, in response to detecting a first touch input, the controller is configured for activating a screen zoom-in mode based on a touch duration time of the first touch input, and, in response to detecting a second touch input, determining the zoom-in area based on multiple touch points associated with the first touch input and the second touch input.

11. The apparatus of claim 8, 9 or 10, wherein, in response to detecting a first touch input, the controller is configured for activating a screen zoom-in mode through the touch screen based on a touch duration time of the first touch input, and, in response to detecting a drag of the first touch input, identifying the screen zoom-in area based on a drag distance of the first touch input.

12. The apparatus of any of claims 8 to 11, wherein, in response to detecting a touch input for a zoom-in icon through the screen touch, the controller is configured for activating a screen zoom-in mode, and, in response to detecting at least two touch inputs through the touch screen, determine the zoom-in area based on multiple touch points associated with the touch inputs.

13. The apparatus of any of claims 8 to 12, wherein the controller is configured for determining the zoom-in ratio by comparing the size of the zoom-in area and the total size of the display area.

14. The apparatus of any of claims 8 to 13, wherein the controller is configured for determining a zoom-in ratio determined by a user.

15. An electronic device for zooming in on a screen, comprising a non-transitory machine-readable medium storing one or more programs wherein the one or more programs are stored in a storage unit and configured to cause, when executed by the electronic device, the electronic device to perform the method of any one of claims 1 to 7.
